# EUROPEAN PATENT SPECIFICATION

(11) **EP 3 585 736 B1**
(45) Date of publication and mention of the grant of the patent: **21.04.2021**
(21) Application number: 17718803.4
(22) Date of filing: 27.02.2017
(51) Int. Cl.: C02F 1/70

(54) **EFFERVESCENT ZERO-VALENT IRON COMPOSITIONS AND METHOD OF REMEDIATION OF POLLUTANTS FROM AQUEOUS SOLUTIONS**
SCHÄUMENDE NULLWERTIGE EISENZUSAMMENSETZUNGEN UND VERFAHREN ZUR SANIERUNG VON VERUNREINIGUNGEN AUS WÄSSRIGEN LÖSUNGEN
COMPOSITIONS EFFERVESCENTES DE FER À VALENCE ZÉRO ET PROCÉDÉ DE REMÉDIATION DE POLLUANTS DE SOLUTIONS AQUEUSES

(43) Date of publication of application: 01.01.2020
(73) Proprietor: Univerzita Palackého v Olomouci, 771 47 Olomouc (CZ)
(72) Inventor: PETALA, Eleni, 68200 Orestiada, Evros (GR); FILIP, Jan, 779 00 Olomouc (CZ); ZBORIL, Radek, 779 00 Olomouc (CZ)
(74) Representative: Hartvichova, Katerina
(86) International application number: PCT/CZ2017/050009
(87) International publication number: WO 2018/153389

(56) References cited:
- CN-A- 103 949 469
- CN-B- 104 609 531
- US-A- 5 707 654
- LIU T ET AL: "Removal of co-present chromate and arsenate by zero-valent iron in groundwater with humic acid and bicarbonate", WATER RESEARCH, ELSEVIER, AMSTERDAM, NL, vol. 43, no. 9, 1 May 2009 (2009-05-01), pages 2540-2548, XP026097731, ISSN: 0043-1354, DOI: 10.1016/J.WATRES.2009.03.005 [retrieved on 2009-03-12]

## Description

### Field of Art

The present invention relates to effervescent zero-valent iron particle (ZVI) compositions, method of manufacture thereof, and to a method of remediation of pollutants from aqueous solutions using such compositions.

### Background Art

Zero Valent Iron (ZVI) Particles are materials known for their superior technological use in environmental remediation processes, because they can remove effectively a wide range of toxic compounds (organic and inorganic). ZVI is known to be very effective in the reduction, decomposition and immobilization of a wide range of pollutants found in contaminated water, such as heavy metals, e.g. hexavalent chromium (Cr(VI)), cadmium (Cd(II)) and cobalt (Co(II)), chlorinated hydrocarbons, e.g. trichloroethylene (PCE) and chlorophenol, pesticides, e.g. diphenyl ethers, and inorganic ions, e.g. nitrate (NO₃⁻) and perchlorate (ClO₄⁻). The key ability of ZVI particles that drives their effectiveness is based on their excellent electron donor capability, coupled with their transformation into more thermodynamically-stable phases of iron, Fe(II) and Fe(III). ZVI has been already applied in the early 1990s as granular ZVI in permeable reactive barrier systems (PRBs). The development of ZVI Nanoparticles (NZVI) represents an advancement of the earlier research on ZVI technology, and it is backed-up from the necessity to overcome practical limitations of the ZVI material, e.g. production costs, mobility, flexibility. NZVI compared to ZVI strengthen the technological applicability by providing higher and faster efficiency, better and longer dispersion ability and enhanced mobility.

Despite the recognized advantages brought by the use of ZVI and NZVI in water treatment technologies, there are still some limitations that hamper its broader environmental application and further improvements are needed. Among others, NZVI shows strong aggregation proclivity, due to the nanoparticles magnetic interactions, fast oxidation and rapid sedimentation. These are the key factors that can severely limit the long-term reactivity and mobility of NZVI. Thus, in the past few years, several research groups worldwide have been actively working on optimizing the chemical architecture of ZVI preparations and reported various chemical approaches that lead to engineer more active ZVI particles, with improved stability, mobility, selectivity, higher availability, applicability in large-scale and delivery capability. Some methods reported for the synthesis of new-types of ZVI nanoparticles include their electrostatic and steric stabilization, e.g. coating with polyelectrolytes or nonionic surfactants, dispersion of the particles in oil-water emulsions, the use of a support material for NZVI synthesis and synthesis of bimetallic particles by combining iron with another metal.

The use of zero-valent iron for wastewater treatment can also be found in patent literature. The document CN 104 609 531 B for example discloses a method for preparing citrate nano zero-valent iron and method for treating organic wastewater with this preparation.

### Disclosure of the Invention

The present invention provides effervescent compositions containing
- a zero-valent iron micro- or nanoparticle-based material selected from zero-valent iron nanoparticles (NZVI), zero-valent iron microparticles (MZVI), zero-valent iron nanoparticle composites, zero-valent iron microparticle composites, bimetallic and/or chemically modified zero-valent iron nanoparticles, bimetallic and/or chemically modified zero-valent iron microparticles, and mixtures thereof,
- alkali metal bicarbonate or carbonate, and
- an acid capable of providing a fizzy effect together with the alkali metal bicarbonate or carbonate, said acid being in a solid form, preferably in a powder form,
wherein the weight ratio of alkali metal bicarbonate or carbonate to the acid is lower than 5:1 and at least 1:10,
and wherein the weight ratio of the acid to zero-valent iron nano- or microparticles is higher than 0.1:1.

The compositions can be obtained by co-grinding the components (optionally with any further desired components) and optionally pressing them to form the final form, which may be, e.g., a tablet.

The zero-valent iron micro- or nanoparticle-based materials are selected from pure zero-valent iron nanoparticles (NZVI) (passivated and non-passivated), pure zero-valent iron microparticles (MZVI), NZVI and/or MZVI composites with an organic or inorganic material (such as composites of NZVI and/or MZVI and carbon materials, NZVI and/or MZVI and metal and non-metal oxides/hydroxides, such as titanium oxide, iron oxide, silica and alumina, NZVI and/or MZVI and polymers, NZVI and/or MZVI and minerals), bimetallic or chemically modified, e.g. doped, NZVI particles (such as NZVI/Pd, NZVI/Ag, NZVI/Ni particles and NZVI/S particles), bimetallic or chemically modified, e.g. doped, MZVI particles (such as MZVI/Pd, MZVI/Ag, MZVI/Ni particles and NZVI/S particles), and mixtures thereof.

In further text, when the term "NZVI or MZVI particles" is used, it is meant to cover all the zero-valent iron micro- and nanoparticle-based materials, unless indicated otherwise.

The acid is preferably selected from environmentally friendly acids, such as citric acid, ascorbic acid, malic and tartaric acid and/or a mixture of them. Most preferably, the acid is citric acid.

The compositions can further contain additional functional components, depending on the required use, e.g. a sorbent, such as a carbon material, silica (SiO₂) or iron oxides/hydroxides.

The thereby formed compositions are spontaneously dispersed very fast, typically in less than 30 seconds, in aqueous media and provide a homogeneous suspension of the NZVI or MZVI particles. The effervescent, "fizzy", effect of the compositions ensures an extremely fast distribution of the NZVI or MZVI particles in the volume of liquid to be remedied. Therefore, the compositions act extremely fast, exhibiting high remediation ability in just few minutes, while exhibiting a prolonged reductive effect, too. Moreover, due to an acid being used as a component, the reduction ability of NZVI and MZVI is enhanced up to an extraordinary magnitude, and the range of the targeted pollutants is widened.

The spontaneous chemical surface modification of NZVI or MZVI that is achieved through the use of an acid, such as citric acid, and alkali metal bicarbonate or carbonate and through the preparation of effervescent compositions by co-grinding and optionally pressing the components, involves surface complexation of the acid and iron. For example, when the acid is citric acid, the surface complexation results in formation of Fe(II)/Fe(III) citrate. Such chemical modification of the nanoparticle surface further contributes to enhanced remediation ability of the compositions. Moreover, NZVI or MZVI particles show no need of activation (i.e. degradation of the oxide shell) or any special treatment before application. These compositions are stable for a long time, occupy small storage space, and could be used in various remediation aspects, especially under urgent and demanding conditions, and when a fast and high activity is needed, and/or prolonged reductive effect is advantageous.

The weight ratio of alkali metal bicarbonate or carbonate to acid is lower than 5:1 and at least 1:10. Preferably, the weight ratio of alkali metal bicarbonate or carbonate to acid is lower than 2:1. More preferably, the weight ratio of the bicarbonate or carbonate to acid is lower than 1:1, or 1:10 to 1:1, or 1:5 to 1:2. Most preferably, the weight ratio of the bicarbonate or carbonate to acid is 1:1-1:4.

The weight ratio of acid to NZVI or MZVI is higher than 0.1:1.

Most preferably, the weight ratio of NZVI or MZVI : acid : alkali metal bicarbonate or carbonate is about 1:2:1 to about 1:2:0.5 or about 1:4:2 to about 1:4:1.

The alkali metal bicarbonate or carbonate is preferably selected from sodium bicarbonate, sodium carbonate, potassium bicarbonate and potassium carbonate.

Nanoparticles are commonly understood in the field of art to represent particles with the size in the range of 1 to 1000 nm, more preferably in the range of 1 to 500 nm. Microparticles are commonly understood in the field of art to represent particles with the size in the range of 1 to 1000 micrometers, more preferably in the range of 1 to 500 micrometers.

The present invention further provides a method for remediation of pollutants, especially heavy metals and organic compounds, from aqueous solutions, wet slurries and wetted surfaces by reduction, comprising the step of contacting the aqueous solution with a composition of the present invention. The reaction of alkali metal bicarbonate or carbonate with acids gives a 'fizzy' effect. In that way, the dispersion of NZVI or MZVI particles is extremely fast, without the need of any stirring or mixing. The CO₂ gas that is formed in the effervescent reaction gives the advantage of moving the NZVI or MZVI particles through the whole volume of the aqueous solution and provides the possibility to almost immediately contact the NZVI or MZVI particles with the pollutants in the whole volume of the aqueous solution. Additionally, the NZVI or MZVI particles in the composition can be surface-modified as described above to allow a faster and more effective reduction of the pollutants.

Due to the use of an acid, such as citric acid, as a component, the degradation ability is enhanced by light. In a preferred embodiment, the method of the present invention is performed in the presence of light, such as visible or UV light. Photocatalysis increases the rate of the remediation reaction in the system formed by the dissolution of the compositions of the present invention.

The effervescent compositions containing NZVI or MZVI according to the present invention are easy to manufacture, cost-effective and environmentally friendly. They exhibit very high and fast remediation ability towards various pollutants, with a prolonged reductive effect. They could be successfully used also in cases where a fast and long-term reactivity, simple-to-use remediation technology is needed, without high demands on storage conditions and with a good shelf-life.

The use of the compositions could also be combined easily with a precipitation and/or absorption process as a subsequent step, e.g. using activated carbon, calcium hydroxide, or silver hydroxide when the removal of the degradation process products is deemed necessary, too.

### Brief Description of Figures

Figure 1: TEM images showing the NZVI particles in the sample NANOFER STAR (top-left), in the sample NANOFER STAR Tablet (top-right), in the sample NZVI Lab-synthesized (NZVIBO) (bottom-left) and in the sample NZVIBO Tablet (bottom-right).
Figure 2: Percentage of Cr(VI) degradation for different ratios between NZVI, citric acid and sodium bicarbonate for reaction time of 1h.
Figure 3: Percentage of Cr(VI) degradation for different ratios between NZVI, citric acid and sodium bicarbonate for reaction time of 2 weeks.
Figure 4: Remediation ability of activated NANOFER STAR particles in comparison with NZVI-NANOFER STAR tablet towards various pollutants, i.e. a) Cr(VI), b) chloramphenicol, c) ethynylestradiol and d) alachlor.
Figure 5: Remediation ability of NANOFER STAR tablet in comparison with Activated NANOFER STAR particles towards Cr(VI) under different light conditions.
Figure 6: Percentage of Cr(VI) degradation for NANOFER STAR and NANOFER STAR Tablet, MZVI and MZVI Tablet, NZVI/Titanium Oxide and NZVI/Titanium Oxide Tablet, NZVI/Carbon and NZVI/Carbon Tablet, NZVI/Ni and NZVI/Ni Tablet for reaction time of 1 and 24 hours.

### Examples of carrying out the Invention

### Materials and Methods

### Chemicals

The following purchased chemical reagents were used without any further purification: iron(III) chloride hexahydrate (FeCl₃·6H₂O) from Sigma-Aldrich, ethanol (EtOH, 99.5%) from Panreac and Penta, sodium borohydride (NaBH4) from Sigma-Aldrich, potassium dichromate (K₂Cr₂O₇) from Sigma-Aldrich, analytical grade acetone 99.95% from Fisher Scientific, phosphoric acid (H₃PO₄) 85% from Sigma-Aldrich, 1,5-diphenylcarbazide from Sigma-Aldrich, titanium butoxide from Sigma-Aldrich, nickel chloride from Sigma-Aldrich, and deionized water. Zero valent iron microparticles and carbon were obtained from local companies. Moreover, commercial NZVI, named NANOFER STAR from NANO IRON, Czech Republic, was used.

### Characterization Techniques

For the characterization of the tablets, the following techniques were used: Transmission electron microscopy (TEM) observations were performed on a JEOL JEM-2010 transmission electron microscope equipped by LaB₆ cathode (accelerating voltage of 200 kV; point-to-point resolution of 0.194 nm). Room-temperature transmission ⁵⁷Fe Mössbauer spectra were recorded employing a Mössbauer spectrometer operating at constant acceleration mode and equipped with 50 mCi ⁵⁷Co(Rh) source. The isomer shift values are referred to α-Fe at room temperature.

### Example 1: Preparation of NZVIBO and NZVIBO tablets

### Preparation of NZVI particles (NZVIBO)

1 g of FeCl₃·6H₂O was dissolved in 50 mL of EtOH. The reducing agent was prepared by dissolving 1 g of NaBH₄ in 50 mL of deionized water. The borohydride solution was added dropwise to the ferric solution while swirling by hand. After complete addition of the borohydride solution, the mixture was left to settle for 45 min. The particles were separated magnetically, washed with H₂O and EtOH thoroughly and dried under vacuum.

### Preparation of the NZVIBO Tablets

The tablets were synthesized as follows: NZVIBO particles, citric acid and sodium bicarbonate were mixed and grinded (-10 min) with the help of pestle in different ratios, e.g. 1:2:0.5 w/w/w. The formation of the tablets (13 mm in diameter) was done using a hydraulic press (40-60 kN) and a pellet die.

### Example 2: Preparation of NANOFER STAR Tablets

The tablets were synthesized as follows: NANOFER STAR particles, citric acid and sodium bicarbonate were mixed and prepared according the same procedure is described in example 1.

### Example 3: Preparation of ZVI composites

In the first step, NZVI/Titanium Oxide, NZVI/Carbon, NZVI/Ni materials were prepared according to procedures described in Petala, E.; Baikousi, M.; Karakassides, M. A.; Zoppellaro, G.; Filip, J.; Tucek, J.; Vasilopoulos, K. C.; Pechousek, J.; Zboril, R. Synthesis, Physical Properties and Application of the Zero-Valent Iron/titanium Dioxide Heterocomposite Having High Activity for the Sustainable Photocatalytic Removal of Hexavalent Chromium in Water. Phys. Chem. Chem. Phys. 2016, 18 (15), 10637-10646*; and in* Baikousi, M.; Georgiou, Y.; Daikopoulos, C.; Bourlinos, A. B.; Filip, J.; Zbořil, R.; Deligiannakis, Y.; Karakassides, M. A. Synthesis and Characterization of Robust Zero Valent Iron/mesoporous Carbon Composites and Their Applications in Arsenic Removal. Carbon N. Y. 2015, 93, 636-647*.* The ZVI compositions were synthesized as follows: NANOFER STAR or MZVI or NZVI/Titanium Oxide or NZVI/Carbon or NZVI/Ni, individually, were mixed with citric acid and sodium bicarbonate in the ratio 1:2:0.5 w/w/w. The powders were mixed and grinded (∼10 min) with the help of pestle.

### Example 4: Characterization of the Tablets

Mössbauer spectra of NZVI-NANOFER STAR and NZVI-NANOFER STAR tablet (STAR tablet) were recorded at 77 K and compared to each other. The resulting Mössbauer hyperfine parameters are listed in Table 1. In the case of NZVI-NANOFER STAR the two components that were found, a sextet and a doublet, correspond to iron atoms having metallic characteristics, Fe(0), and to an iron (III), Fe(III), oxide phase in an amorphous structure, respectively. From these results, NZVI-NANOFER STAR can be described as composed of nanoparticles with a core-shell structure, where the metallic core is covered by amorphous iron oxide phase. From the relative area of the two components, the shell accounts for 10.7% of the total amount of iron.

Differing from NZVI-NANOFER STAR, the NANOFER STAR tablets exhibit three components, one sextet and two doublets. Their parameters are also listed in Table 1. The sextet and one doublet (with δ of 0.31 mm/s and ΔE_{Q} of 1.02 mm/s) share the same fingerprints as those observed in the NZVI-NANOFER STAR. They correspond to the metallic iron core and to the iron (III) oxide shell, respectively. The appearance of a different component, with B_{hf} of 0 T, δ of 1.24 mm/s and ΔE_{Q} of 2.2 mm/s, is attributed to Fe (II) phase. The percentage of metallic iron is 89%, the same as for NZVI-NANOFER STAR, while the Fe(III) and Fe(II) phases were found as 5.2 and 5.8%, respectively. Thus, citric acid acts as a reducing agent, driving the formation of iron (II) from the oxidized iron (III) formed in the nanoparticle surface.

**Table 1 Values of the Mössbauer hyperfine parameters, derived from the room-temperature Mössbauer spectra of NANOFER STAR and NANOFER STAR tablet (where δ is the isomer shift, ΔE_{Q} is the quadrupole splitting, B_{hf} is the hyperfine magnetic field, Γ the line width and RA is the relative spectral area of individual spectral components.)**

| **Sample** | **Component** | **δ ± 0.01 (mm/s)** | **ΔE_{Q} ± 0.01 (mm/s)** | **B_{hf} ± 0.3 (T)** | **Γ ± 0.01 (mm/s)** | **RA ± 1 (%)** | **Assignment** |
|---|---|---|---|---|---|---|---|
| **NANOFER STAR** | Sextet | 0 | -- | 32.95 | 0.31 | 89.3 | α-Fe |
| | Doublet | 0.33 | 0.98 | -- | 0.58 | 10.7 | Fe (III) |
| **NANOFER STAR Tablet** | Sextet | 0 | -- | 33.05 | 0.21 | 89 | α-Fe |
| | Sextet | 0.31 | 1.02 | -- | 0.58 | 5.2 | Fe (III) |
| | Doublet | 1.24 | 2.2 | -- | 0.58 | 5.8 | Fe (II) |

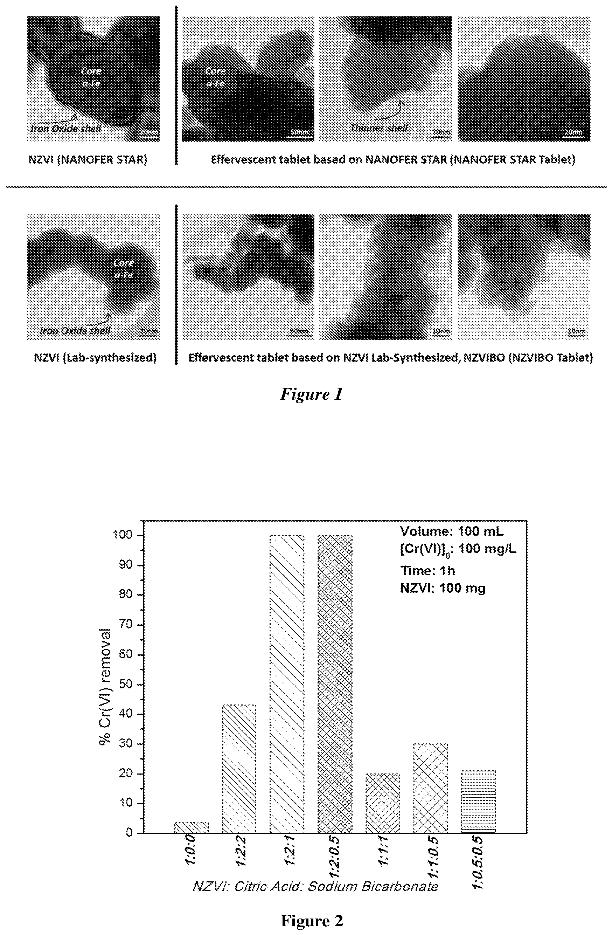

The core-shell structure was further confirmed by TEM analysis. Figure 1 shows the comparison among the samples NANOFER STAR, STAR tablet, NZVI-Lab synthesized (NZVIBO) and NZVIBO tablet and highlights the morphological differences. In all materials, the core is made by metallic iron, α-Fe, (dark area) surrounded by the oxides/hydroxides (grey-color coating), as indicated by arrows in the Figure 1. NANOFER STAR and NZVIBO exhibit average particle size of 50 nm and of 150 nm, respectively, and the thickness of the oxide shell was estimated as 5 nm in both cases. The nanoparticles tend to form large agglomerates. The NANOFER STAR tablet and NZVIBO tablet show similar morphology and size of the core compared to the precursor NZVI powder that has been used, respectively. However, significant changes can be seen on the surface of the particles. The shell appears non-homogeneous, discontinuous and partly much thinner than in NANOFER STAR and NZVIBO. The oxide shell of NZVI serves to the sorption, precipitation and the electron transfer phenomena from the core to a pollutant. Consequently, the reduction processes derived from the core can be accelerated when the shell is thinner. Following the Mössbauer findings, the outer surface of the particles in the case of the tablets is a mixture of Fe(II)/Fe(III). Therefore, the combination of a smaller thickness for the shell, its anticipated enhanced permeability and the presence of additional reducing equivalents (Fe(II) surface iron) are all contributing factors for the enhancement in the remediation ability of these materials as herein validated.

### Example 5: Tablet Performance in Pollutant Remediation

In order to optimize the composition of the tablets, different ratios of NZVI, citric acid and sodium bicarbonate were tested and the tablets were examined on Cr(VI) removal (as a model of pollutant remediation). The tablets were prepared as described in Example 2, using the weight ratios of the components as described herein for testing.

The remediation assays were carried out as follows:
*Hexavalent Chromium Determination:* The determination of the amount of hexavalent chromium (Cr(VI)) was estimated colorimetrically by the 1,5-diphenylcarbazide method. According to this method, dissolved hexavalent chromium reacts with diphenylcarbazide (under acidic conditions) to form a red-purple chromium 1,5-diphenyl-carbohydrazide complex that is measured at 542 nm by UV-Vis spectroscopy. To each tested solution (3 mL), 120 µL of 0.01 M diphenylcarbazide solution in acetone and 60 µL of 1M phosphoric acid solution were added. The solution was stirred and left for 10 minutes to allow color development and afterwards was measured. The calculation of Cr(VI) concentration was based on the calibration curve, that was preliminary determined by using the absorbance spectra of standard chromium solutions.

*Chloramphenicol, ethynylestradiol and alachlor determination:* The determination of chloramphenicol, ethynylestradiol and alachlor was achieved by a Dionex Ultimate 3000 HPLC system with UV-Vis detector. The chromatographic separation was achieved on Hibar HR 150-2.1 column using isocratic gradient 45% water and 55% acetonitrile for chloramphenicol, 25% water and 75% acetonitrile for ethinylestadiol and alachlor at a flow rate 0.2 mL/min. Retention time was 2.4, 2.7 and 4.2 min for chloramphenicol, ethinylestadiol and alachlor, respectively.

Various ratios of NZVI, citric acid, and sodium bicarbonate were tested.

The ratio NZVI:citric acid was found to not be crucial for the overall efficiency. Thus, tablets consisting NZVI:citric acid in ratio 1:1, 1:2, 1:3 and 1:4 w/w exhibited similar remediation ability. The efficiency was affected by the ratio between citric acid and the bicarbonate or carbonate. Figure 2 shows the correlation between the ratio citric acid:sodium bicarbonate and the ability of the tablets to eliminate Cr(VI). From the results, the conclusion can be extracted that the best ratio of NZVI:citric acid:sodium bicarbonate is 1:2:0.5 w/w. However, all tested ratios performed better than bare NZVI particles.

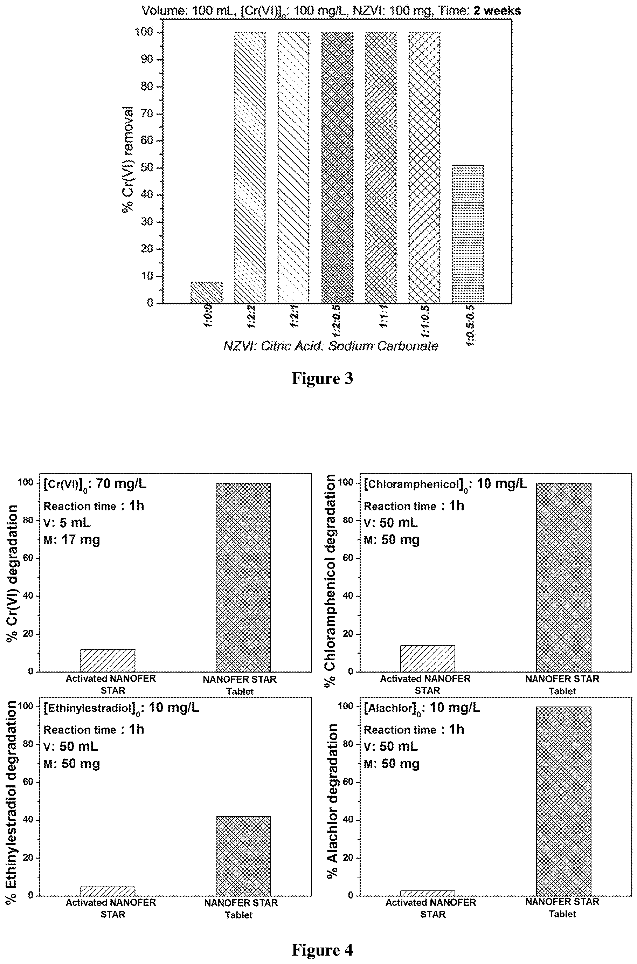

The NANOFER STAR tablets prepared according to Example 2 were tested in remediation of various pollutants, i.e. hexavalent chromium (*Cr(VI)*), alachlor, ethinylestradiol and chloramphenicol. These pollutants were chosen as representative examples of different categories of pollutants in order to verify the possibility of a wide potential of these materials. Thus, Cr(VI) was chosen as a heavy metal, alachlor as toxic herbicide, ethinylestradiol as a estrogenic pharmaceutical waste and chloramphenicol as a carcinogenic pharmaceutical waste. Figure 4 shows the comparison between activated NANOFER STAR particles and NZVI-NANOFER STAR tablet (STAR tablet). Activated NANOFER STAR particles is the material that is obtained after dispersion of NANOFER STAR particles in water, homogenizing and aging for 48h allowing for partial dissolution of the iron oxide shell. The activation is a common procedure that is required when NANOFER STAR particles are applied. It is obvious that NANOFER STAR tablet exhibits substantially higher remediation ability towards all the pollutants that have been tested without even applying any kind of pretreatment.

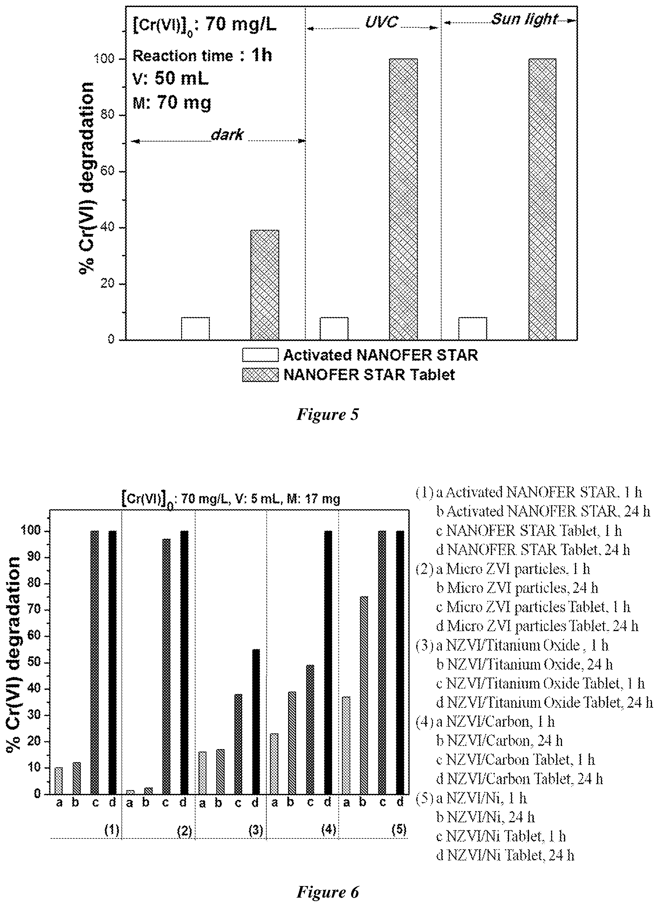

The overall remediation ability of NZVI tablets is amplified when a source of light is used. When an aqueous toxic solution is treated by NZVI tablet, irradiation, even by sun-light, can enhance drastically the reactivity. The photocatalytic activity, involving a multi-step radical generation, is derived from the ferricitrate complex that is formed on the shell *(*Quici, N., Morgada, M. E., Gettar, R. T., Bolte, M. & Litter, M. I. Photocatalytic degradation of citric acid under different conditions: TiO2 heterogeneous photocatalysis against homogeneous photolytic processes promoted by Fe(III) and H2O2. Appl. Catal. B Environ. 71, 117-124 (2007*),* Rodríguez, E. M., Núñez, B., Fernández, G. & Beltrán, F. J. Effects of some carboxylic acids on the Fe(III)/UVA photocatalytic oxidation of muconic acid in water. Appl. Catal. B Environ. 89, 214-222 (2009*)).* Figure 5 shows the enhanced remediation ability of STAR tablet towards Cr(VI) under UVC and sun-light. It has to be mentioned that the photocatalytic activity is achieved even if the tablet is applied in the dark and after few hours (∼1-7) the solution is exposed to any source and intensity of light.

Enhanced degradation ability was found for compositions made by citric acid, sodium bicarbonate and various ZVI materials, i.e. NANOFER STAR, MZVI, NZVI/Titanium Oxide, NZVI/Carbon and NZVI/Ni. Figure 6 shows the percentage of Cr(VI) degradation for these compositions in comparison with the ZVI materials that have been used in any case for 1 and 24 h reaction time.

Cr(VI) removal experiments were repeated with NANOFER STAR tablet containing ascorbic acid or tartaric acid instead of citric acid, and similar results were obtained.

## Claims

1. An effervescent composition, in particular for remediation of aqueous solutions, **characterized in that** it contains
- a zero-valent iron micro- or nanoparticle-based material selected from zero-valent iron nanoparticles, zero-valent iron microparticles, zero-valent iron nanoparticle composites, zero-valent iron microparticle composites, bimetallic and/or chemically modified zero-valent iron nanoparticles, bimetallic and/or chemically modified zero-valent iron microparticles, and mixtures thereof,
- alkali metal bicarbonate or carbonate, and
- an acid capable of providing a fizzy effect together with the alkali metal bicarbonate or carbonate, said acid being in a solid form, preferably in a powder form,
wherein the weight ratio of alkali metal bicarbonate or carbonate to the acid is lower than 5:1 and at least 1:10,
and wherein the weight ratio of the acid to zero-valent iron nano- or microparticles is higher than 0.1:1.

2. The composition according to claim 1, wherein the zero-valent iron micro- or nanoparticle-based material is selected from zero-valent iron nanoparticles; zero-valent nanoparticle composites with carbon; zero-valent nanoparticle composites with metal and non-metal oxides/hydroxides such as titanium dioxide, iron oxides, silica and alumina; zero-valent nanoparticle composites with polymers; zero-valent nanoparticle composites with minerals; bimetallic, and/or chemically modified zero-valent iron nanoparticles such as zero-valent nanoparticles with silver, zero-valent nanoparticles with palladium, zero valent iron nanoparticles with nickel and zero valent iron nanoparticles with sulfur; zero-valent microparticle composites with carbon; zero-valent microparticle composites with metal and non-metal oxides/hydroxides such as titanium dioxide, iron oxides, silica and alumina; zero-valent microparticle composites with polymers; zero-valent microparticle composites with minerals; bimetallic, and/or chemically modified zero-valent iron microparticles such as zero-valent microparticles with silver, zero-valent microparticles with palladium, zero-valent microparticles with nickel and zero-valent iron microparticles with sulfur; and mixtures thereof.

3. The composition according to claim 1 or 2, wherein the weight ratio of alkali metal bicarbonate or carbonate to the acid is lower than 2:1, more preferably lower than 1:1.

4. The composition according to claim 1 or 2, wherein the weight ratio of alkali metal bicarbonate or carbonate to the acid is 1:5 to 1:2.

5. The composition according to claim 1 or 2, wherein the weight ratio of zero-valent iron micro- or nanoparticles: acid: alkali metal bicarbonate or carbonate is 1:2:1 to 1:2:0.5 or 1:4:2 to 1:4:1.

6. The composition according to any one of the preceding claims, wherein the alkali metal bicarbonate or carbonate is selected from sodium bicarbonate, sodium carbonate, potassium bicarbonate and potassium carbonate.

7. The composition according to any one of the preceding claims where the acid is preferably selected from environmentally friendly acids, such as citric acid, ascorbic acid, malic and tartaric acid and/or a mixture of them.

8. The composition according to any one of the preceding claims, further comprising an absorbent, such as carbon or silica.

9. The composition according to any one of the preceding claims, which is in the form of a tablet.

10. A method of production of the effervescent composition according to any one of the preceding claims, **characterized in that** zero-valent iron micro- or nanoparticles, acid and an alkali metal bicarbonate or carbonate are combined, co-ground and optionally pressed to the final form, such as a tablet.

11. A method for remediation of pollutants, especially heavy metals and organic compounds, from aqueous solution, wet slurry or wetted surface by chemical reduction, **characterized in that** it comprises the step of contacting the aqueous solution, wet slurry or wetted surface with the composition according to any one of claims 1 to 9.

12. The method according to claim 11, wherein the step of contacting the aqueous solution, wet slurry or wetted surface with a composition according to any one of claims 1 to 9, wherein the acid is preferably citric acid, is performed in the presence of light, such as sun-light or UV-light, or the step of contacting the aqueous solution with a composition according to any one of claims 1 to 9 is followed by exposure to light, such as visible or UV light.

13. The method according to claim 11 or 12, wherein the step of contacting the aqueous solution with a composition according to any one of claims 1 to 9 is followed by a precipitation and/or absorption process.

## Patentansprüche

1. Eine Brausenzusammensetzung, insbesondere zur Sanierung wässriger Lösungen, die **dadurch gekennzeichnet ist, dass** sie enthält
- ein nullwertiges Eisen-Mikro- oder Nanopartikel-basiertes Material, ausgewählt aus nullwertigen Eisen-Nanopartikeln, nullwertigen Eisen-Mikropartikeln, nullwertigen Eisen-Nanopartikel-Verbundwerkstoffen, nullwertigen Eisen-Mikropartikel-Verbundwerkstoffen, Bimetall- und/oder chemisch modifizierten nullwertigen Eisen-Nanopartikel, Bimetall- und/oder chemisch modifizierte nullwertige Eisen-Mikropartikel, und Gemische davon,
- Alkalimetallbicarbonat oder -carbonat und
- eine Säure, die zusammen mit dem Alkalimetallbicarbonat oder -carbonat einen Sprudeleffekt erzeugen kann, wobei die Säure in fester Form, vorzugsweise in Pulverform vorliegt;
wobei das Gewichtsverhältnis von Alkalimetallbicarbonat oder -carbonat zur Säure niedriger als 5:1 und mindestens 1:10 ist,
und wobei das Gewichtsverhältnis der Säure zu nullwertigen Eisen-Nano- oder Mikropartikeln höher als 0,1:1 ist.

2. Zusammensetzung nach Anspruch 1, wobei das nullwertige Eisen-Mikro- oder Nanopartikel-basiertes Material ausgewählt ist aus nullwertigen Eisen-Nanopartikeln; nullwertige Nanopartikel-Verbundwerkstoffe mit Kohlenstoff; nullwertige Nanopartikel-Verbundwerkstoffe mit Metall- und Nichtmetalloxiden/-hydroxiden wie Titandioxid, Eisenoxiden, Siliciumdioxid und Aluminiumoxid; nullwertige Nanopartikel-Verbundwerkstoffen mit Polymeren; nullwertige Nanopartikel-Verbundwerkstoffen mit Mineralien; Bimetall- und/oder chemisch modifizierte nullwertige Eisen-Nanopartikel wie nullwertige Nanopartikel mit Silber, nullwertige Nanopartikel mit Palladium, nullwertige Eisen-Nanopartikel mit Nickel und nullwertige Eisen-Nanopartikel mit Schwefel; nullwertige Mikropartikel-Verbundwerkstoffe mit Kohlenstoff; nullwertige Mikropartikel-Verbundwerkstoffe mit Metall- und Nichtmetalloxiden/-hydroxiden wie Titandioxid, Eisenoxiden, Siliciumdioxid und Aluminiumoxid; nullwertige Mikropartikel-Verbundwerkstoffe mit Polymeren; nullwertige Mikropartikel-Verbundwerkstoffe mit Mineralien; Bimetall- und/oder chemisch modifizierte nullwertige Eisen-Mikropartikel wie nullwertige Mikropartikel mit Silber, nullwertige Mikropartikel mit Palladium, nullwertige Mikropartikel mit Nickel und nullwertige Eisen-Mikropartikel mit Schwefel; und Gemische davon.

3. Zusammensetzung nach Anspruch 1 oder 2, wobei das Gewichtsverhältnis von Alkalimetallbicarbonat oder -carbonat zur Säure niedriger als 2:1 ist, bevorzugter niedriger als 1:1.

4. Zusammensetzung nach Anspruch 1 oder 2, wobei das Gewichtsverhältnis von Alkalimetallbicarbonat oder -carbonat zur Säure 1:5 bis 1:2 beträgt.

5. Zusammensetzung nach Anspruch 1 oder 2, wobei das Gewichtsverhältnis von nullwertigen Eisen-Mikro- oder -Nanopartikeln: Säure: Alkalimetallbicarbonat oder -carbonat 1:2:1 bis 1:2:0,5 oder 1:4:2 bis 1:4:1 beträgt.

6. Zusammensetzung nach einem der vorhergehenden Ansprüche, wobei das Alkalimetallbicarbonat oder -carbonat ausgewählt ist aus Natriumbicarbonat, Natriumcarbonat, Kaliumbicarbonat und Kaliumcarbonat.

7. Zusammensetzung nach einem der vorhergehenden Ansprüche, wobei die Säure vorzugsweise aus umweltfreundlichen Säuren wie Zitronensäure, Ascorbinsäure, Äpfelsäure und Weinsäure und/oder einer Mischung davon ausgewählt ist.

8. Zusammensetzung nach einem der vorhergehenden Ansprüche, ferner umfassend ein Absorptionsmittel wie Kohlenstoff oder Siliciumdioxid.

9. Zusammensetzung nach einem der vorhergehenden Ansprüche, die in Form einer Tablette vorliegt.

10. Verfahren zur Herstellung der Brausenzusammensetzung nach einem der vorhergehenden Ansprüche, **gekennzeichnet dadurch, dass** nullwertige Eisen-Mikro- oder -Nanopartikel, Säure und ein Alkalimetallbicarbonat oder -carbonat kombiniert, zusammen gemahlen und gegebenenfalls gepresst werden zu dem endgültige Form, wie eine Tablette.

11. Verfahren zur Sanierung von Schadstoffen, insbesondere Schwermetallen und organischen Verbindungen, aus wässriger Lösung, feuchter Aufschlämmung oder benetzter Oberfläche, durch chemische Reduktion, **gekennzeichnet dadurch, dass** es den Schritt des Kontakts der wässrigen Lösung, der feuchten Aufschlämmung oder der benetzten Oberfläche mit der Zusammensetzung nach einem der Ansprüche 1 bis 9 umfasst.

12. Verfahren nach Anspruch 11, wobei der Schritt des Kontakts der wässrigen Lösung, der feuchten Aufschlämmung oder der benetzten Oberfläche mit der Zusammensetzung nach einem der Ansprüche 1 bis 9, wobei die Säure vorzugsweise Zitronensäure ist, in Gegenwart von Licht wie Sonnenlicht oder UV-Licht durchgeführt wird, oder auf den Schritt des Kontakts der wässrigen Lösung mit der Zusammensetzung nach einem der Ansprüche 1 bis 9 folgt die Belichtung mit Licht wie sichtbarem oder UV-Licht.

13. Verfahren nach Anspruch 11 oder 12, wobei dem Schritt des Kontakts der wässrigen Lösung mit einer Zusammensetzung nach einem der Ansprüche 1 bis 9 ein Fällungs- und/oder Absorptionsverfahren folgt.

## Revendications

1. Composition effervescente, en particulier pour l'assainissement de solutions aqueuses, **caractérisée en ce qu'**elle contient
- un matériau à base de micro- ou nanoparticules de fer zéro-valent choisi parmi les nanoparticules de fer zéro-valent, les microparticules de fer zéro-valent, les composites de nanoparticules de fer zéro-valent, les composites de microparticules de fer zéro-valent, bimétalliques et/ou chimiquement modifiés nanoparticules de fer zéro-valent, bimétalliques et/ou chimiquement modifiés microparticules de fer zéro-valent, et leurs mélanges,
- bicarbonate ou carbonate de métal alcalin, et
- un acide capable de fournir un effet pétillant conjointement avec le bicarbonate ou carbonate de métal alcalin, ledit acide étant sous forme solide, de préférence sous forme de poudre,
où le rapport pondéral du bicarbonate ou du carbonate de métal alcalin à l'acide est inférieur à 5:1 et au moins 1:10,
et dans lequel le rapport pondéral de l'acide aux nanoparticules ou microparticules de fer zéro-valent est supérieur à 0,1:1.

2. Composition selon la revendication 1, où le matériau à base de micro- ou nanoparticules de fer zéro-valent est choisi parmi les nanoparticules de fer zéro-valent; composites de nanoparticules zéro-valent avec du carbone; composites de nanoparticules zéro-valent avec des oxydes/hydroxydes métalliques et non métalliques tels que le dioxyde de titane, les oxydes de fer, la silice et l'alumine; composites de nanoparticules zéro-valent avec des polymères; composites de nanoparticules zéro-valent avec des minéraux; nanoparticules de fer zéro-valent bimétalliques et/ou chimiquement modifiées telles que nanoparticules zéro-valent avec de l'argent, nanoparticules zéro-valent avec du palladium, nanoparticules de fer zéro valent avec du nickel et nanoparticules de fer zéro-valent avec du soufre; composites de microparticules zéro-valent avec du carbone; des composites de microparticules zéro-valent avec des oxydes/hydroxydes métalliques et non métalliques tels que le dioxyde de titane, les oxydes de fer, la silice et l'alumine; composites de microparticules zéro-valent avec des polymères; composites de microparticules zéro-valent avec des minéraux; microparticules de fer zéro-valent bimétalliques et/ou chimiquement modifiées telles que microparticules zéro-valent avec de l'argent, microparticules zéro-valent avec du palladium, microparticules zéro-valent avec du nickel et microparticules de fer zéro-valent avec du soufre; et leurs mélanges.

3. Composition selon la revendication 1 ou 2, où le rapport pondéral du bicarbonate ou carbonate de métal alcalin à l'acide est inférieur à 2:1, plus préférablement inférieur à 1:1.

4. Composition selon la revendication 1 ou 2, où le rapport pondéral du bicarbonate ou carbonate de métal alcalin à l'acide est de 1:5 à 1:2.

5. Composition selon la revendication 1 ou 2, où le rapport pondéral des micro- ou nanoparticules de fer à zéro-valent: acide: bicarbonate ou carbonate de métal alcalin est de 1:2:1 à 1:2:0,5 ou 1:4:2. à 1:4:1.

6. Composition selon l'une quelconque des revendications précédentes, où le bicarbonate ou carbonate de métal alcalin est choisi parmi le bicarbonate de sodium, le carbonate de sodium, le bicarbonate de potassium et le carbonate de potassium.

7. Composition selon l'une quelconque des revendications précédentes, où l'acide est de préférence choisi parmi les acides respectueux de l'environnement, tels que l'acide citrique, l'acide ascorbique, l'acide malique et tartrique et/ou un mélange de ceux-ci.

8. Composition selon l'une quelconque des revendications précédentes, comprenant en outre un absorbant, tel que du carbone ou de la silice.

9. Composition selon l'une quelconque des revendications précédentes, qui se présente sous la forme d'un comprimé.

10. Procédé de fabrication de la composition effervescente selon l'une quelconque des revendications précédentes, **caractérisé en ce que** des micro- ou nanoparticules de fer zéro-valent, un acide et un bicarbonate ou carbonate de métal alcalin sont combinés, co-broyés et éventuellement pressés afin de former le forme finale, comme un comprimé.

11. Procédé d'assainissement de polluants, en particulier de métaux lourds et de composés organiques, à partir d'une solution aqueuse, d'une suspension humide ou d'une surface mouillée, par réduction chimique, **caractérisé en ce qu'**il comprend l'étape de mise en contact de la solution aqueuse, de la suspension humide ou de la surface mouillée avec la composition selon l'une quelconque des revendications 1 à 9.

12. Procédé selon la revendication 11, où l'étape de mise en contact de la solution aqueuse, de la suspension humide ou de la surface mouillée avec la composition selon l'une quelconque des revendications 1 à 9, dans laquelle l'acide est de préférence l'acide citrique, est réalisée en présence de la lumière, telle que la lumière du soleil ou la lumière UV, ou l'étape de mise en contact de la solution aqueuse avec la composition selon l'une quelconque des revendications 1 à 9 est suivie d'une exposition à la lumière, telle que la lumière visible ou UV.

13. Procédé selon la revendication 11 ou 12, où l'étape de mise en contact de la solution aqueuse avec une composition selon l'une quelconque des revendications 1 à 9 est suivie d'un procédé de précipitation et/ou d'absorption.
